(19) Europäisches Patentamt
European Patent Office
Office européen des brevets

(11) EP 4 575 547 A1

(12) EUROPÄISCHE PATENTANMELDUNG

(43) Veröffentlichungstag:
25.06.2025 Patentblatt 2025/26

(21) Anmeldenummer: 24219750.7

(22) Anmeldetag: 13.12.2024

(51) Internationale Patentklassifikation (IPC):
G01S 5/02 (2010.01)    G01S 5/14 (2006.01)
G01S 13/87 (2006.01)   H01Q 15/14 (2006.01)

(52) Gemeinsame Patentklassifikation (CPC):
G01S 13/878; G01S 5/0273; G01S 5/14;
H04B 7/145

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
GE KH MA MD TN

(30) Priorität: 21.12.2023 DE 102023136190

(71) Anmelder: Deutsches Zentrum für Luft- und
Raumfahrt e.V.
53227 Bonn (DE)

(72) Erfinder:
• Schmidhammer, Martin
  81927 München (DE)
• Gentner, Christian
  81379 München (DE)
• Sand, Stephan
  82211 Herrsching am Ammersee (DE)

(74) Vertreter: Fink Numrich
Patentanwälte PartmbB
Paul-Gerhardt-Allee 24
81245 München (DE)

(54) **VERFAHREN ZUR RECHNERGESTÜTZTEN LOKALISATION EINES OBJEKTS MITHILFE EINES FUNKNETZES**

(57) Die Erfindung betrifft ein Verfahren zur rechnergestützten Lokalisation eines Objekts (O) mittels eines Funknetzes, wobei sich die Funkwellen des Funknetzes in einem Raumbereich entlang einer Anzahl von Ausbreitungspfaden (PA1, PA2, PA3, PA4, PA1', ..., PAN') zwischen einer Anzahl von Sendern (TR, TR') und einer Anzahl von Empfängern (RE, RE1', ..., REN') ausbreiten, wobei ein jeweiliger Ausbreitungspfad (PA1, PA2, PA3, PA4, PA1', ..., PAN') einen vorbekannten Übertragungsweg der Funkwellen des Funknetzes zwischen einem Sender (TR, TR') und einem Empfänger (RE, RE1', ..., REN') repräsentiert, die dem jeweiligen Ausbreitungspfad (PA1, PA2, PA3, PA4, PA1', ..., PAN') zugeordnet sind. Im erfindungsgemäßen Verfahren werden zu einem jeweiligen Messzeitpunkt aus einer Anzahl von Messzeitpunkten Signalwerte ($\hat{\alpha}_i(t_k)$) des Funknetzes für die Anzahl von Ausbreitungspfaden (PA1, PA2, PA3, PA4, PA1', ..., PAN') gewonnen, und aus den zum jeweiligen Messzeitpunkt gewonnenen Signalwerten ($\hat{a}_i(t_k)$) wird die Position des Objekts (O) innerhalb des Raumbereichs zu dem jeweiligen Messzeitpunkt geschätzt. Dabei umfasst die Anzahl von Ausbreitungspfaden (PA1, PA2, PA3, PA4, PA1', ..., PAN') einen oder mehrere vorgegebene Ausbreitungspfade (PA1', ..., PAN'), wobei ein jeweiliger vorgegebener Ausbreitungspfad (PA1', ..., PAN') ein oder mehrere Oberflächenelemente (4) enthält, die an vorbekannten Positionen im Raumbereich angeordnet sind und jeweils als eine rekonfigurierbare intelligente Oberfläche ausgestaltet sind.

Fig. 4

EP 4 575 547 A1

**Beschreibung**

Die Erfindung betrifft ein Verfahren zur rechnergestützten Lokalisation eines Objekts mittels eines Funknetzes.

Aus dem Stand der Technik ist es bekannt, Funkwellen eines Funknetzes, die zwischen entsprechenden Sendern und Empfängern übertragen werden, zur räumlichen Lokalisation von Objekten zu nutzen. Dabei werden Signaldämpfungen der Funksignale auf deren Ausbreitungspfaden zwischen den jeweiligen Sendern und Empfängern erfasst und ausgewertet. Die Signaldämpfungen geben Rückschlüsse auf die Position des zu lokalisierenden Objekts, denn die physikalische Ausdehnung des Objekts vermindert die Signalstärke auf dem Ausbreitungspfad, den das Objekt gerade kreuzt.

In der Druckschrift [1] ist ein Verfahren zur rechnergestützten Lokalisation eines Objekts über Funkwellen beschrieben, welches die Signalstärken des Funknetzes auf direkten Ausbreitungspfaden, d.h. in Sichtlinie (englisch: Line of Sight) zwischen jeweiligen Sendern und Empfängern, analysiert, um hieraus die Position des Objekts zu bestimmen.

Die Druckschrift [2] beschreibt ein Verfahren zur Lokalisation eines Objekts mittels eines Funknetzes, bei dem neben Signalstärken des Funknetzes auf direkten Ausbreitungspfaden zwischen jeweiligen Sendern und Empfängern auch Signalstärken auf sog. Mehrwege-Ausbreitungspfaden berücksichtigt werden, auf denen Funkwellen unter Zwischenschaltung von Reflexionen und Streuungen übertragen werden.

Um Objekte mit den oben genannten Verfahren zur lokalisieren, ist die Kenntnis über den Verlauf der entsprechenden Ausbreitungspfade erforderlich. Dieses Wissen kann z.B. aus den geometrischen Abmessungen des Raumbereichs, in dem die Lokalisation stattfindet, sowie den räumlichen Positionen der Sender und Empfänger des Funknetzes gewonnen werden.

Herkömmliche Lokalisationsverfahren haben den Nachteil, dass die Ausbreitungspfade der Funkwellen, für welche Signaldämpfungen erfasst werden, fest vorgegeben sind und nicht angepasst werden können.

Aufgabe der Erfindung ist es, ein Verfahren zur rechnergestützten Lokalisation eines Objekts mit Hilfe eines Funknetzes zu schaffen, in dem die zur Lokalisation genutzten Ausbreitungspfade angepasst werden können.

Diese Aufgabe wird durch das Verfahren gemäß Patentanspruch 1 gelöst. Weiterbildungen der Erfindung sind in den abhängigen Ansprüchen definiert.

In dem erfindungsgemäßen Verfahren zur rechnergestützten Lokalisation eines Objekts wird ein Funknetz genutzt, dessen Funkwellen sich in einem Raumbereich entlang einer Anzahl (vorzugsweise einer Mehrzahl) von Ausbreitungspfaden zwischen einer Anzahl (vorzugsweise einer Mehrzahl) von Sendern und einer Anzahl (vorzugsweise einer Mehrzahl) von Empfängern ausbreiten. Ein jeweiliger Ausbreitungspfad repräsentiert einen vorbekannten Übertragungsweg der Funkwellen des Funknetzes zwischen einem Sender und einem Empfänger, die dem jeweiligen Ausbreitungspfad zugeordnet sind.

In einem Schritt a) des erfindungsgemäßen Verfahrens werden zu einem jeweiligen Messzeitpunkt aus einer Anzahl (vorzugsweise einer Mehrzahl) von Messzeitpunkten jeweils Signalwerte des Funknetzes für die Anzahl von Ausbreitungspfaden gewonnen, wobei der Signalwert für einen jeweiligen Ausbreitungspfad ein Signalstärkemaß der Funkwellen ist, welche auf dem jeweiligen Ausbreitungspfad von dem Empfänger des jeweiligen Ausbreitungspfads (d.h. vom dem Empfänger, der dem jeweiligen Ausbreitungspfad zugeordnet ist) empfangen werden. Insbesondere werden diese Signalwerte aus dem am Empfänger erfassten Funksignal mittels eines an sich bekannten Verfahrens zur Kanalschätzung, wie z.B. mit dem Algorithmus aus der Druckschrift [4] bestimmt. Die Signalwerte stellen in diesem Fall die Signalstärkeveränderung bzw. die Signalstärke relativ zu einer zeitliche gemittelten Signalstärke dar. Über die Abnahme dieser Signalstärke kann eine Signaldämpfung erfasst werden, die durch ein Objekt auf bzw. in der Nähe eines entsprechenden Ausbreitungspfads hervorgerufen wird.

In einem Schritt b) des erfindungsgemäßen Verfahrens wird aus den zum jeweiligen Messzeitpunkt gewonnenen Signalwerten die Position des Objekts innerhalb des Raumbereichs zu dem jeweiligen Messzeitpunkt geschätzt, wofür z.B. das in der Druckschrift [2] beschriebene Verfahren verwendet werden kann. Der Begriff der Schätzung der Position ist weit zu verstehen. Insbesondere muss nicht notwendigerweise ein Wert für die Position angegeben werden, sondern die geschätzte Position kann auch lediglich durch einen räumlichen Abschnitt des Raumbereichs spezifiziert werden, in dem sich das Objekt befindet. In einer einfachen Variante kann die Positionsschätzung beispielsweise das Ergebnis liefern, dass sich das Objekt auf einem bestimmten Ausbreitungspfad bzw. einem bestimmten Abschnitt eines entsprechenden Ausbreitungspfads befindet.

Das erfindungsgemäße Verfahren zeichnet sich dadurch aus, dass die Anzahl von Ausbreitungspfaden ein oder mehrere spezielle Ausbreitungspfade umfasst, die im Folgenden als vorgegebene Ausbreitungspfade bezeichnet werden. Ein jeweiliger vorgegebener Ausbreitungspfad enthält dabei ein oder mehrere Oberflächenelemente, die an vorbekannten Positionen im Raumbereich angeordnet sind und jeweils als eine rekonfigurierbare intelligente Oberfläche ausgestaltet sind. Rekonfigurierbare intelligente Oberflächen, die auch als RIS-Oberflächen bzw. mit dem englischen Begriff "Reconfigurable Intelligent Surfaces" bezeichnet werden, sind hinlänglich aus dem Stand der Technik bekannt und werden beispielsweise in der Druckschrift [3] beschrieben. Unter rekonfigurierbaren intelligenten Oberflächen sind allgemein Oberflächen zu verstehen, für welche die Abstrahlcharakteristik von Funkwellen konfigurierbar ist, welche von der rekonfigurierbaren intelligenten Oberfläche in Antwort auf einfallende Funkwellen abgestrahlt werden. Somit kann unabhängig von dem Einfallswinkel, in dem Funkwellen auf die rekonfigurierbare intelligente Oberfläche fallen, eine Wiederabstrahlung von Funkwellen mit beliebiger Abstrahlcharakteristik bewirkt werden.

Im erfindungsgemäßen Verfahren fallen auf ein jeweiliges Oberflächenelement, das als rekonfigurierbare intelligente Oberfläche ausgestaltet ist, entlang des jeweiligen vorgegebenen Ausbreitungspfads Funkwellen, welche aus Funkwellen des Senders des jeweiligen vorgegebenen Ausbreitungspfads (d.h. des Senders, der dem jeweiligen vorgegebenen Ausbreitungspfad zugeordnet ist) hervorgehen. Die darauf fallenden Funkwellen können dabei Funkwellen sein, die direkt vom Sender in Sichtlinie zum Oberflächenelement abgestrahlt werden, oder gegebenenfalls auch Funkwellen, die zuvor streuende oder reflektierende Objekte bzw. eine oder mehrere andere rekonfigurierbare intelligente Oberflächen passiert haben.

Das jeweilige Oberflächenelement auf dem jeweiligen vorgegebenen Ausbreitungspfad wandelt die darauf fallenden Funkwellen in Funkwellen, welche mit einer vorbekannten konfigurierten Abstrahlcharakteristik von dem jeweiligen Oberflächenelement ausgesendet werden, wobei zumindest ein Teil der ausgesendeten Funkwellen entlang des jeweiligen vorgegebenen Ausbreitungspfads zu dem Empfänger des jeweiligen vorgegebenen Ausbreitungspfads (d.h. zu dem Empfänger, der dem jeweiligen vorgegebenen Ausbreitungspfad zugeordnet ist) gelangt.

Das erfindungsgemäße Verfahren hat den Vorteil, dass durch die Verwendung von rekonfigurierbaren intelligenten Oberflächen entsprechende Ausbreitungspfade geeignet angepasst werden können bzw. gegebenenfalls neue Ausbreitungspfade hinzugefügt werden können bzw. entfernt werden können. Hierdurch kann z.B. die Genauigkeit der Lokalisation in bestimmten Teilabschnitten des Raumbereichs verändert werden.

In einer bevorzugten Ausgestaltung der Erfindung ist zumindest einer der vorgegebenen Ausbreitungspfade ein spezifischer Ausbreitungspfad, der ein einzelnes Oberflächenelement (d.h. nur ein Oberflächenelement) enthält, auf welches Funkwellen entlang des spezifischen Ausbreitungspfads in Sichtlinie zu dem Sender des spezifischen Ausbreitungspfads (d.h. dem Sender, der dem spezifischen Ausbreitungspfad zugeordnet ist) fallen. Dabei wird zumindest ein Teil der durch das einzelne Oberflächenelement gewandelten Funkwellen entlang des spezifischen Ausbreitungspfads am Empfänger des spezifischen Ausbreitungspfads (d.h. am Empfänger, der dem spezifischen Ausbreitungspfad zugeordnet ist) in Sichtlinie zu dem einzelnen Oberflächenelement empfangen. Ein spezifischer Ausbreitungspfad zeichnet sich somit dadurch aus, dass Funkwellen in gerader Linie sowohl von dem Sender zum Oberflächenelement als auch von dem Oberflächenelement zum Empfänger übermittelt werden. Auf dem entsprechenden Ausbreitungspfad finden somit keine zusätzlichen Reflexionen bzw. Streuungen statt. Hierdurch wird eine hohe Signalstärke der Funkwellen auf dem Ausbreitungspfad erreicht.

In einer bevorzugten Variante der soeben beschriebenen Ausführungsform richtet der Sender des spezifischen Ausbreitungspfads die Funkwellen als Strahlungskeule auf das einzelne Oberflächenelement. Alternativ ist jedoch auch möglich, dass der Sender Funkwellen homogen in ein vorbestimmtes Raumsegment und gegebenenfalls auch omnidirektional aussendet, sofern ein Teil der Funkwellen zu dem einzelnen Oberflächenelement gelangt. Durch das Aussenden der Funkwellen als Strahlungskeule werden jedoch höhere Signalstärken für die Funksignale auf dem entsprechenden Ausbreitungspfad erreicht.

In einer weiteren Variante des erfindungsgemäßen Verfahrens enthält zumindest ein vorgegebener Ausbreitungspfad mehrere Oberflächenelemente. Ebenso ist es möglich, dass zumindest ein vorgegebener Ausbreitungspfad neben dem oder den Oberflächenelementen ein oder mehrere Streuobjekte enthält, an denen Funkwellen entlang des vorgegebenen Ausbreitungspfads gestreut (d.h. diffus abgelenkt) werden. Alternativ oder zusätzlich zu Streuobjekten kann der vorgegebene Ausbreitungspfad auch eine oder mehrere Reflexionsobjekte enthalten, an denen Funkwellen entlang des vorgegebenen Ausbreitungspfads reflektiert (d.h. gerichtet abgelenkt) werden.

In einer weiteren bevorzugten Ausgestaltung der Erfindung enthält die Anzahl von vorgegebenen Ausbreitungspfaden eine Gruppe von vorgegebenen Ausbreitungspfaden, wobei den vorgegebenen Ausbreitungspfaden der Gruppe der gleiche Sender, jedoch unterschiedliche Empfänger zugeordnet sind und wobei die vorgegebenen Ausbreitungspfade der Gruppe das oder die gleichen Oberflächenelemente enthalten. Vorzugsweise sind die vorgegebenen Ausbreitungspfade der Gruppe die oben beschriebenen spezifischen Ausbreitungspfade, bei denen Funkwellen in Sichtlinie zwischen Sender und Oberflächenelement und zwischen Oberflächenelement und Empfänger übertragen werden.

Mit der soeben beschriebenen Variante der Erfindung können auf einfache Weise Informationen zur geschätzten Position des Objekts abgeleitet werden. Zeigen die Signalwerte auf allen spezifischen Ausbreitungspfaden einer Gruppe eine Dämpfung an, kann hieraus geschlossen werden, dass sich das Objekt auf bzw. in der Nähe der Sichtlinie zwischen Sender und Oberflächenelement befindet. Zeigt hingegen nur der Signalwert von einem spezifischen Ausbreitungspfad der Gruppe eine Signaldämpfung an, kann hieraus geschlossen werden, dass sich das Objekt auf bzw. in der Nähe der Sichtlinie zwischen Oberflächenelement und dem Empfänger des spezifischen Ausbreitungspfads befindet.

In einer Variante des erfindungsgemäßen Verfahrens strahlt zumindest ein Oberflächenelement, das zumindest ein vorgegebener Ausbreitungspfad enthält, homogen Funkwellen in einen vorgegebenen Raumwinkel und gegebenenfalls auch omnidirektional ab. Nichtsdestotrotz ist es auch möglich, dass zumindest ein Oberflächenelement, das zumindest ein vorgegebener Ausbreitungspfad enthält, die Funkwellen als eine oder mehrere Strahlungskeulen aussendet, wobei eine jeweilige Strahlungskeule in Richtung eines vorgegebenen Ausbreitungspfads verläuft. Hierdurch können höhere Signalstärken der Funkwellen auf den entsprechenden Ausbreitungspfaden erreicht werden.

Das erfindungsgemäße Verfahren kann in beliebigen Funknetzen zum Einsatz kommen. Beispielsweise kann als Funknetz ein WLAN-Netz aus der Standardfamilie IEEE 802.11 genutzt werden, z.B. WiFi 6 (Standard IEEE 802.11ax). Ebenso ist es möglich, dass das Funknetz ein UWB-Netz (UWB = Ultra Wide Band) gemäß der Standardfamilie IEEE 802.15-4 ist. Ferner kann das Funknetz ein Mobilfunknetz (z.B. 5G oder 6G) sein.

Neben dem oben beschriebenen Verfahren betrifft die Erfindung eine Vorrichtung zur rechnergestützten Lokalisation eines Objekts mittels eines Funknetzes, wobei die Vorrichtung dazu eingerichtet ist, das erfindungsgemäße Verfahren bzw. eine oder mehrere bevorzugte Varianten des erfindungsgemäßen Verfahrens durchzuführen. Die Vorrichtung enthält somit den oder die Sender, den oder die Empfänger und den oder die Oberflächenelemente, die im erfindungsgemäßen Verfahren genutzt werden, um ein entsprechendes Funknetz mit dem oder den vorgegebenen Ausbreitungspfaden der Funkwellen zu erzeugen. Ferner enthält die Vorrichtung entsprechende Mittel, um Signalwerte auf den Ausbreitungspfaden zu gewinnen und hieraus die Position des Objekts zu schätzen.

Ausführungsbeispiele der Erfindung werden nachfolgend anhand der beigefügten Figuren detailliert beschrieben.

Es zeigen:

Fig. 1 eine schematische Draufsicht auf einen Raumbereich mit sich darin ausbreitendem Funknetz, anhand der allgemein das Prinzip der passiven Lokalisation eines Objekts mittels Funkwellen erläutert wird;

Fig. 2 ein Diagramm, welches eine gemessene Kanalimpulsantwort für ein Funksignal des Funknetzes aus Fig. 1 verdeutlicht;

Fig. 3 ein Diagramm, welches die Signalstärkeveränderung für einen Ausbreitungspfad aus Fig. 1 unter der Berücksichtigung der Bewegung des in Fig. 1 dargestellten Benutzers wiedergibt;

Fig. 4 eine schematische Darstellung von über eine RIS-Oberfläche verlaufenden Ausbreitungspfaden, welche in einer Ausführungsform der Erfindung zur passiven Lokalisation eines Objekts genutzt werden.

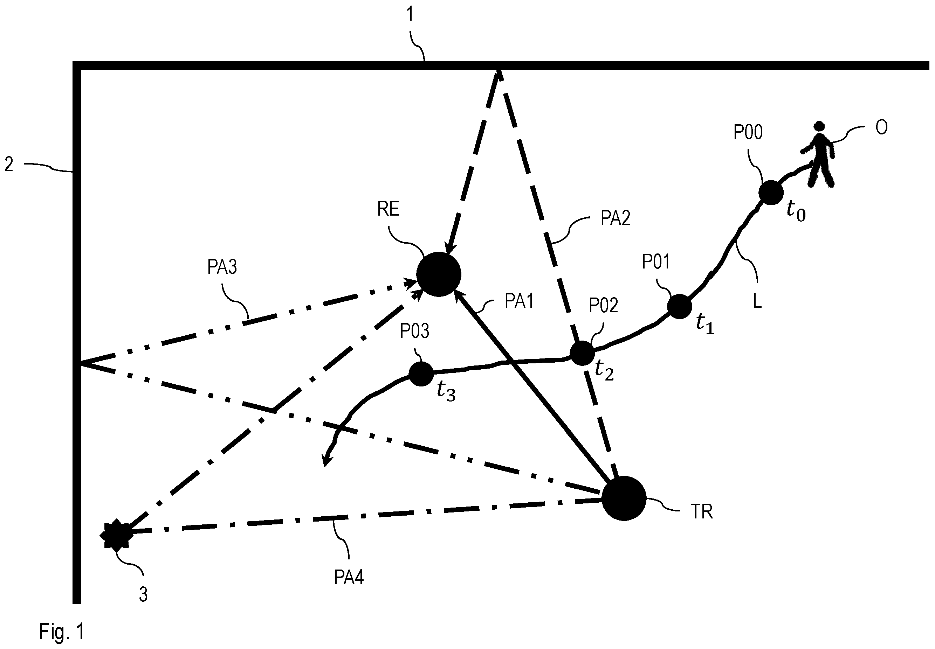

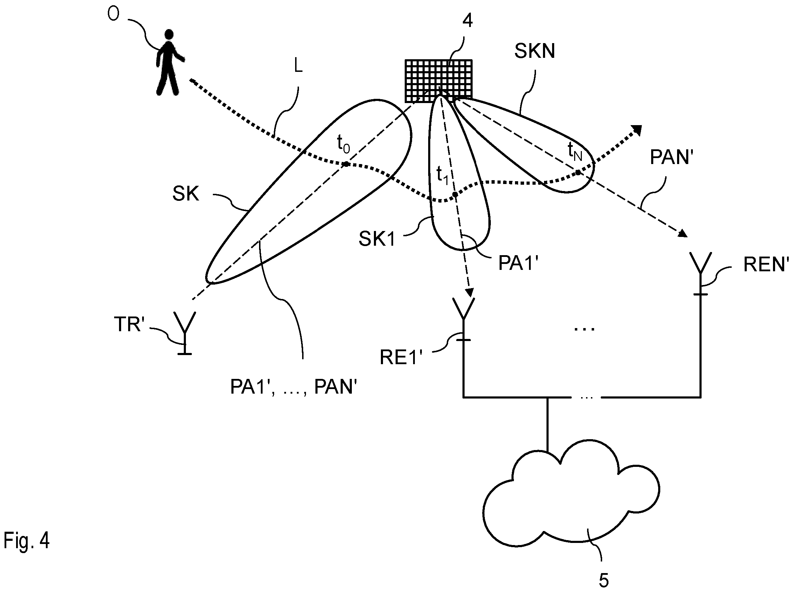

Im Folgenden wird anhand von Fig. 1 bis Fig. 3 zunächst allgemein das Prinzip der passiven Lokalisation eines Objekts erläutert. Dieses Prinzip wird auch von der Erfindung genutzt, wobei eine Ausführungsform der Erfindung anhand von Fig. 4 beschrieben wird.

Im Beispiel der Fig. 1 wird eine passive Lokalisation eines Objekts O in einem Raumbereich durchgeführt, in dem ein Funknetz installiert ist. Das Objekt O ist ein menschlicher Benutzer, der sich entlang einer Trajektorie L bewegt. Das Funknetz umfasst eine Vielzahl von Netzknoten bzw. Zugangspunkten, die jeweils entsprechende Funksignale aussenden und empfangen können. In Fig. 1 sind beispielhaft zwei dieser Netzknoten durch schwarze Punkte dargestellt. Im Rahmen der passiven Lokalisation wird das Funksignal des Netzknotens TR ausgewertet, der als Sender fungiert. Dieses Funksignal wird vom Netzknoten RE empfangen, der als Empfänger fungiert. Unabhängig hiervon kann der Netzknoten TR auch Funksingale empfangen und der Netzknoten RE auch Funksignale aussenden. Das Funknetz basiert in der hier beschriebenen Ausführungsform auf dem UWB-Standard (Familie IEEE 802.15-4). Nichtsdestotrotz kann das Funknetz auch auf einem anderen Standard, wie z.B. WLAN (Familie IEEE 802.11) basieren. Ebenso kann das Funknetz ein Mobilfunknetz sein.

Der in Fig. 1 dargestellte Raumbereich wird durch zwei Wände 1 und 2 begrenzt und enthält neben den Netzknoten TR und RE ein streuendes Objekt 3. Die dominanten Signalausbreitungspfade zwischen dem Sender TR und dem Empfänger RE sind durch Linien mit entsprechenden Bezugszeichen PA1, PA2, PA3 und PA4 angedeutet. Der Ausbreitungspfad PA1 ist der sog. LoS-Pfad (LoS = Line of Sight), welcher der Sichtlinie zwischen Sender TR und Empfänger RE entspricht. Die Sichtlinie repräsentiert die direkte Ausbreitung der Funkwellen (d.h. ohne Reflexionen) zwischen dem Sender TR und dem Empfänger RE. Der Ausbreitungspfad PA2 stellt einen Pfad mit einer Reflexion der Funkwellen an der Wand 1 dar und der Ausbreitungspfad PA3 repräsentiert einen Pfad mit einer Reflexion der Funkwellen an der Wand 2. Demgegenüber ist der Ausbreitungspfad PA4 ein Pfad, bei dem die Funkwellen an dem streuenden Objekt 3 gestreut werden.

In dem Szenario der Fig. 1 sollen die Positionen PO0, PO1, PO2 und POS des Objekts O zu den jeweiligen Zeitpunkten $t_0$, $t_1$, $t_2$ und $t_3$ mittels passiver Lokalisation geschätzt werden. Hierzu wird der Verlauf der Ausbreitungspfade PA1 bis PA4 benötigt. Dieser wurde vorab geeignet bestimmt. Beispielsweise kann dieser Verlauf aus dem Wissen über die Abmessungen des Raumbereichs mit den Positionen der darin enthaltenen Objekte (d.h. der Wände 1, 2, des Senders TR, des Empfängers RE und des streuenden Objekts 3) abgeleitet werden.

4

Im Folgenden wird zunächst die Form der am Empfänger RE empfangenen Funksignale erläutert, bevor näher auf die passive Lokalisation eingegangen wird. Die einzelnen, über die verschiedenen Ausbreitungspfade empfangenen Signalkomponenten werden aufgrund der unterschiedlichen Längen der Ausbreitungspfade mit unterschiedlichen Propagationsverzögerungen empfangen. Hieraus ergibt sich aus einem empfangenen Funksignal eine Kanalimpulsantwort CIR, die eine Überlagerung der entlang der Signalübertragung gedämpften Signalkomponenten der verschiedenen Ausbreitungspfade zwischen Sender TR und Empfänger RE ist. Allgemein ist die Kanalimpulsantwort CIR die Summe einer unendlichen Anzahl von Ausbreitungspfaden. Jedoch kann der Empfänger RE nur Signale erfassen, deren Leistungen oberhalb einer bestimmten Sensitivitätsschwelle liegen.

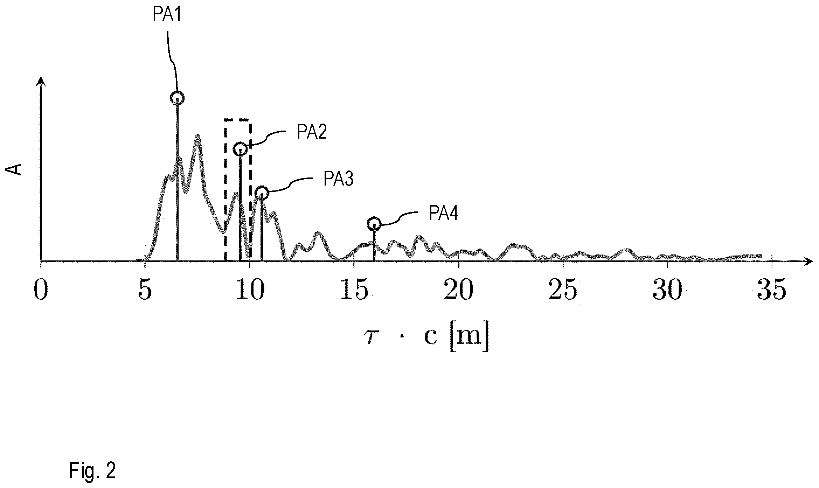

Fig. 2 zeigt beispielhaft die vom Empfänger RE gemessene Kanalimpulsantwort für einen vom Sender TR ausgesendeten Funksignalimpuls entsprechend dem UWB-Standard IEEE 802.15-4a. Entlang der Abszisse ist die Propagationsdistanz $\tau \cdot c$ (Verzögerungszeit multipliziert mit Lichtgeschwindigkeit) in Metern und entlang der Ordinate der Betrag A der Signalamplitude (d.h. die Signalstärke in der Form der empfangenen Signalleistung) aufgetragen. Die entsprechenden Signalausbreitungspfade ergeben sich als Peaks in der Kanalimpulsantwort, wobei die mit den Peaks assoziierten Ausbreitungspfade durch die Bezugszeichen PA1 bis PA4 dieser Pfade referenziert sind. Wie zu erwarten, hat der direkte LoS-Ausbreitungspfad zwischen Sender TR und Empfänger RE das Signal mit der größten Signalstärke, wohingegen die anderen Ausbreitungspfade deutlich geringere Signalstärken aufweisen.

Die Kanalimpulsantwort $h(t_k, \tau)$ kann zu diskreten Zeitpunkten $t_k$ der Signalerfassung durch eine endliche Anzahl von N Signalkomponenten entsprechend den unterschiedlichen Ausbreitungspfade wie folgt beschrieben werden:

$$h(t_k, \tau) = \sum_{i=1}^{N} \alpha_i(t_k) \cdot \delta(\tau - \tau_i(t_k)) \qquad (1)$$

Dabei bezeichnet $\delta(\cdot)$ die Dirac-Verteilung. Jede Signalkomponente entspricht einem Ausbreitungspfad und wird durch die zeitlich veränderliche Propagationsverzögerung $\tau_i(t_k)$ und die zeitlich veränderliche komplexe Amplitude $\alpha_i(t_k)$ charakterisiert. Dabei entspricht i = 1 dem LoS-Ausbreitungspfad, der gemäß Fig. 1 der Ausbreitungspfad PA1 ist. In dem hier beschriebenen Ausführungsbeispiel werden stationäre Netzknoten (d.h. ein stationärer Sender TR und ein stationärer Empfänger RE) betrachtet, so dass die jeweiligen Propagationsverzögerungen zeitlich fest sind, d.h. es gilt $\tau(t_k) = \tau_i$.

Das empfangene Funksignal ist in der Bandbreite begrenzt, d.h. es wird in der Zeitdomäne mit der Auflösung von 1B abgetastet, wobei B die Bandbreite ist. Demzufolge ist die Signalamplitude einer einzelnen Abtastung eine Summe aus unterschiedlichen Beiträgen. Ferner ist das empfangene Funksignal durch Rauschen beeinflusst. Im Rahmen der hier beschriebenen Variante des erfindungsgemäßen Verfahrens wird die Kanalimpulsantwort CIR gemessen und hieraus mittels einer an sich bekannten Kanalschätzung die Amplitude $\alpha_i(t_k)$ und Propagationsverzögerung $\tau_i$ für die entsprechende Signalkomponente (d.h. den entsprechenden Ausbreitungspfad) gewonnen. Die Propagationsverzögerung braucht dabei lediglich für einen Zeitpunkt $t_k$ bestimmt werden, da die Netzknoten stationär sind. Alternativ kann die Propagationsverzögerung ein über die Zeitpunkte $t_k$ gemittelter Wert sein. Aus der Amplitude $\alpha_i(t_k)$ wird anschließend die Veränderung $\hat{\alpha}_i(t_k)$ der Signalstärke bzw. Signalleistung $|\alpha_i(t_k)|$ relativ zu der Signalstärke $|\alpha_{mean}|$ bestimmt, welche die gemittelte Signalstärke über alle für den entsprechenden Ausbreitungspfad verarbeiteten Messungen ist. Die Signalstärkeveränderung bzw. die Signalstärke relativ zur gemittelten Signalstärke ist somit wie folgt gegeben:

$$\hat{\alpha}_i(t_k) = |\alpha_i(t_k)/\alpha_{mean}| \qquad (2)$$

In einer bevorzugten Variante erfolgt die Kanalschätzung zur Bestimmung der Amplitude $\alpha_i(t_k)$ und der Propagationsverzögerung $\tau_i$ basierend auf dem Algorithmus aus der Druckschrift [4]. Es können jedoch auch andere bekannte Algorithmen zur Kanalschätzung genutzt werden. Aus der ermittelten Propagationsverzögerung $\tau_i$ ergibt sich der entsprechende Ausbreitungspfad, zu dem wiederum die entsprechende Signalveränderung $\hat{\alpha}_i(t_k)$ gehört.

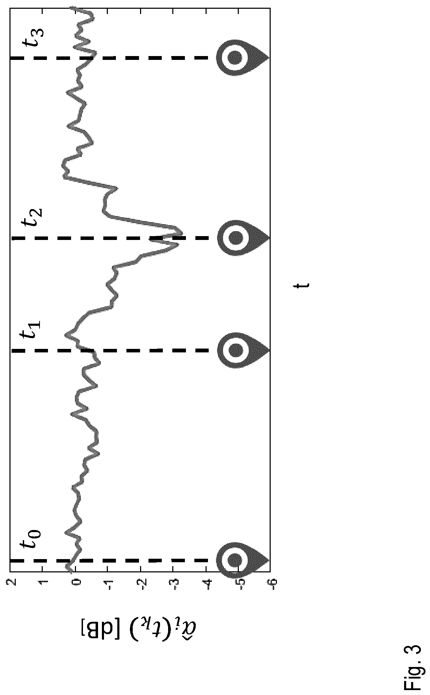

Ziel der passiven Lokalisation ist es nunmehr, die Auswirkungen des Objekts O auf die obigen Signalstärkewerte $\hat{\alpha}_i(t_k)$ bei der Bewegung des Objekts entlang der Trajektorie L zu ermitteln. Hierbei macht man sich die Erkenntnis zu Nutze, dass es aufgrund der physikalischen Ausdehnung des Objekts O bei dessen Anwesenheit auf bzw. in der Nähe eines Ausbreitungspfads zu einer Signaldämpfung kommt, d.h. der Signalstärkewert $\hat{\alpha}_i(t_k)$ auf dem entsprechenden Ausbreitungspfad nimmt ab. Dieser Effekt ist beispielhaft in Fig. 3 verdeutlicht. Diese Figur zeigt die für das Szenario der Fig. 1 ermittelte Signalstärkeveränderung $\hat{\alpha}_i(t_k)$ in dB für den Ausbreitungspfad PA2 (d.h. i=2) in Abhängigkeit von der Zeit t. Dabei sind in Fig. 3 die Erfassungszeitpunkte $t_0$ bis $t_3$ entsprechend der Fig. 1 durch gestrichelte vertikale Linien hervorgehoben.

Wie man aus Fig. 3 erkennt, tritt zu den Zeitpunkten $t_0$ und $t_1$, d.h. wenn der Nutzer weit entfernt vom Ausbreitungspfad PA2 ist, keine signifikante Signalstärkeveränderung auf. Die Fluktuationen des Signals sind vielmehr auf Rauschen zurückzuführen. Zum Zeitpunkt $t_2$, d.h. wenn der Nutzer sich auf dem Ausbreitungspfad PA2 befindet, wird das Signal aufgrund der physikalischen Ausdehnung des Nutzers stark gedämpft, was sich in einer Abnahme des

Signalstärkewerts $\hat{\alpha}_i(t_k)$ zum Zeitpunkt $t_2$ widerspiegelt. Nachdem der Benutzer den Ausbreitungspfad PA2 gekreuzt hat und sich von diesem entfernt, liegt zum entsprechenden Zeitpunkt $t_3$ keine Signaldämpfung mehr vor, so dass die Stärke des Signals der Fig. 3 zum Zeitpunkt $t_3$ im Wesentlichen wieder auf dem gleichen Niveau wie zu den Zeitpunkten $t_0$ und $t_1$ liegt.

Aus der obigen Information der Signalstärkeveränderung auf den jeweiligen Ausbreitungspfaden kann mit an sich bekannten Verfahren die Position des Objekts O abgeschätzt werden. Beispielsweise kann für das Szenario der Fig. 1 das in der oben genannten Druckschrift [2] beschriebene Verfahren genutzt werden, das auch Mehrwege-Ausbreitungspfade mit Reflexionen bzw. Streuungen der Funkwellen berücksichtigt, wie das auch in dem Szenario der Fig. 1 der Fall ist.

In herkömmlichen Verfahren zur passiven Lokalisation werden nur Ausbreitungspfade berücksichtigt, bei denen Funkwellen in Sichtlinie zwischen Sender und Empfänger bzw. unter Zwischenschaltung von streuenden und/oder reflektierenden Objekten zwischen Sender und Empfänger übertragen werden. Die Eigenschaften der streuenden bzw. reflektierenden Objekte können dabei nicht beeinflusst werden, so dass auf die Ausbreitungspfade während der Lokalisation nicht Einfluss genommen werden kann. Im Unterschied hierzu werden in der nachfolgend beschriebenen Ausführungsform der Erfindung zumindest zum Teil Ausbreitungspfade genutzt, die geeignet eingestellt bzw. verändert werden können. Hierdurch kann die Lokalisation flexibel angepasst werden, indem Ausbreitungspfade z.B. vermehrt in ein Gebiet gelegt werden, in dem die Anwesenheit des entsprechenden zu lokalisierenden Objekts vermutet wird.

Die im Rahmen der Erfindung verwendeten variablen Ausbreitungspfade werden mit Hilfe von Oberflächenelementen in der Form von an sich bekannten rekonfigurierbaren intelligenten Oberflächen realisiert, die im Folgenden auch als RIS-Oberflächen bezeichnet werden. Je nach Ausgestaltung können in dem erfindungsgemäßen Verfahren nur Ausbreitungspfade über RIS-Oberflächen genutzt werden. Nichtsdestotrotz können zusätzlich bei der Lokalisation auch bereits bekannte Ausbreitungspfade, wie LoS-Pfade bzw. Mehrwege-Ausbreitungspfade genutzt werden, wie diese beispielsweise in Fig. 1 gezeigt sind.

Fig. 4 zeigt beispielhaft eine Variante des erfindungsgemäßen Verfahrens, das zur Lokalisation Ausbreitungspfade über ein einzelnes Oberflächenelement 4 in der Form einer RIS-Oberfläche nutzt. In Fig. 4 ist eine Draufsicht auf einen Raumbereich analog zu Fig. 1 wiedergegeben, in dem ein Objekt O in der Form eines menschlichen Nutzers bei seiner Bewegung entlang der Trajektorie L lokalisiert werden soll. Beispielhaft sind in Fig. 4 drei Messzeitpunkte $t_0$, $t_1$ und $t_N$ angegeben, zu denen jeweils die Position des Nutzers über die Signalstärkeveränderungen auf entsprechenden Ausbreitungspfaden geschätzt werden soll.

Die in Fig. 4 dargestellte RIS-Oberfläche kann die Abstrahlcharakteristik von Funkwellen steuern bzw. verändern, welche in Antwort auf einfallende Funkwellen ausgesendet werden. In der Regel nutzt die RIS-Oberfläche hierzu eine Vielzahl von diskreten Elementen mit steuerbaren Abstrahleigenschaften. Diese Elemente sind beispielsweise passive Schaltungen, welche einfallende Funksignale nach einer Filterung wieder ausstrahlen, ohne die Leistung des Funksignals zu erhöhen.

Fig. 4 zeigt ein Szenario, bei dem ein Sender TR' mit vorbekannter Position Funkwellen auf das Oberflächenelement 4 richtet. Mit anderen Worten werden die Funkwellen von dem Sender TR' als Strahlungskeule SK auf das Oberflächenelement 4 gerichtet. Alternativ ist es auch möglich, dass der Sender TR' Funkwellen homogen in ein vorbestimmtes Raumsegment und gegebenenfalls auch omnidirektional aussendet, sofern die Funkwellen zu dem Oberflächenelement 4 gelangen. Die Verwendung einer gerichteten Strahlungskeule SK hin zum Oberflächenelement 4 hat den Vorteil, dass hierdurch höhere Signalstärken erreicht werden können.

Neben dem Sender TR' enthält das Funknetz der Fig. 4 auch eine Mehrzahl von Empfängern REi' (i=1, 2, ...N). Für das Oberflächenelement 4 wurde dabei eine Abstrahlcharakteristik eingestellt bzw. konfiguriert, bei der Funkwellen gerichtet über insgesamt N Strahlungskeulen SK1 bis SKN ausgesendet werden, wobei jede Strahlungskeule SKi (i=1, 2, ...N) auf einen zugeordneten Empfänger REi' (i=1, ..., N) gerichtet ist. Dabei aktiviert das Oberflächenelement 4 mit einer sehr hohen Frequenz aufeinanderfolgend die einzelnen Strahlungskeulen. Die Zeitspanne des Schaltens zwischen den Strahlungskeulen ist im Vergleich zu der Geschwindigkeit, mit der sich das Objekt O bewegt, vernachlässigbar. Mit anderen Worten werden die Strahlungskeulen Ski im Wesentlichen gleichzeitig bei den jeweiligen Empfängern REi' empfangen.

Im Rahmen der Lokalisation werden zu entsprechenden Messzeitpunkten die Signalstärken entsprechend der obigen Gleichung (2) an den jeweiligen Empfänger RE1' bis REN' erfasst. Diese Signalstärken werden in einer gemeinsamen Rechnereinrichtung 5 verarbeitet, die beispielhaft in Fig. 4 als Rechner-Cloud dargestellt ist. In dem Szenario der Fig. 4 ergeben sich insgesamt N neuartige Ausbreitungspfade PA1' bis PAN', die in herkömmlichen Verfahren nicht eingesetzt werden und über das Oberflächenelement 4 verlaufen. Diese Ausbreitungspfade sind in Fig. 4 durch gestrichelte Linien angedeutet. Alle Ausbreitungspfade haben den gleichen Abschnitt zwischen Empfänger TR' und Oberflächenelement 4. Der Abschnitt der Ausbreitungspfade zwischen dem Oberflächenelement 4 und den jeweiligen Empfängern RE1' bis REN' ist jedoch unterschiedlich.

Die Ausbreitungspfade PA1' bis PAN' können im Rahmen der passiven Lokalisation genauso wie Mehrwege-Ausbreitungspfade behandelt werden. Im Besonderen ergibt sich für einen jeweiligen Ausbreitungspfad PAi' (i=1, ..., N)

folgende Propagationsverzögerung:

$$\tau_i^{RIS} = (\|r_{RIS} - r_{TR'}\| + \|r_{RIS} - r_{REi'}\|)/c \qquad (3)$$

Dabei bezeichnet $r_{TR'}$ die vorbekannte Position des Senders TR', $r_{REi'}$ die vorbekannte Position des jeweiligen Empfängers REi' (i = 1, ..., N) und $r_{RIS}$ die vorbekannte Position des Oberflächenelements 4. Ferner entspricht c der Lichtgeschwindigkeit.

Für die obigen Ausbreitungspfade PA1' bis PAN' wird wiederum mittels einer an sich bekannten Kanalschätzung die Propagationsverzögerung sowie die Signalstärkeveränderung für den entsprechenden Ausbreitungspfad ermittelt. Mittels der obigen Gleichung (3) kann eine gemessene Propagationsverzögerung einem Ausbreitungspfad mit der entsprechenden Signalstärkeveränderung zugeordnet werden. Mit dem Verfahren aus dem Dokument [2] kann dann die Position des Objekts O aus den Signalstärkeveränderungen auf den über das Oberflächenelement 4 verlaufenden Ausbreitungspfaden PA1' bis PAN' geschätzt werden.

In einer sehr einfachen Realisierung des erfindungsgemäßen Verfahrens wird die Position des Objekts O sehr grob abgeschätzt, indem die Positionsschätzung lediglich angibt, ob sich das Objekt auf dem Pfadabschnitt der Ausbreitungspfade zwischen dem Sender TR' und dem Oberflächenelement 4 oder auf einem der Pfadabschnitte zwischen dem Oberflächenelement 4 und einem entsprechenden Empfänger REi' befindet. Mit anderen Worten werden folgende Schlussfolgerungen aus den zu einem jeweiligen Messzeitpunkt erfassten Signalstärkeveränderungen auf den Ausbreitungspfaden gezogen:

i) Für einen Messzeitpunkt ergeben sich auf allen Ausbreitungspfaden PA1' bis PAN' Dämpfungen in der Signalstärke (entspricht dem Zeitpunkt $t_0$ in Fig. 4): Hieraus ergibt sich die Schlussfolgerung, dass sich das Objekt O auf bzw. in der Nähe des Pfadabschnitts zwischen Sender TR' und Oberflächenelement 4 befindet.

ii) Nur für einen Pfad PAi' (i = 1, ... N) wird eine Dämpfung in der Signalstärke festgestellt (entspricht für i=1 dem Zeitpunkt $t_1$ und für i = N dem Zeitpunkt $t_N$ in Fig. 4):
Hieraus ergibt sich die Schlussfolgerung, dass das Objekt O auf bzw. in der Nähe des Pfadabschnitts des Ausbreitungspfads PAi' zwischen Oberflächenelement 4 und Empfänger REi' angeordnet ist.

iii) Auf keinen der Ausbreitungspfade PA1' bis PAN' ergibt sich eine Dämpfung in der Signalstärke:
Hieraus ergibt sich die Schlussfolgerung, dass das Objekt O nicht in der Nähe eines der Ausbreitungspfade PA1' bis PAN' angeordnet ist.

Im Vorangegangenen wurde eine Ausführungsform der Erfindung beschrieben, bei dem die Ausbreitungspfade PA1' bis PAN' über ein einzelnes Oberflächenelement 4 verlaufen und die Abschnitte der Ausbreitungspfade auf der Sichtlinie zwischen Sender und Oberflächenelement bzw. zwischen Oberflächenelement und Empfänger liegen. In einer abgewandelten Ausführungsform ist es jedoch auch möglich, dass Ausbreitungspfade berücksichtigt werden, welche die Funkwellen über mehrere zwischengeschaltete Oberflächenelemente weiterleiten bzw. welche auch andere Objekte enthalten, an denen Funkwellen reflektiert bzw. gestreut werden.

Darüber hinaus ist es auch nicht unbedingt erforderlich, dass das entsprechende Oberflächenelement 4 gerichtet über Strahlungskeulen Funkwellen zu entsprechenden Empfängern aussendet. Vielmehr ist es auch möglich, dass das Oberflächenelement homogen in ein vorbestimmtes Raumsegment und gegebenenfalls auch omnidirektional Funkwellen aussendet, sofern diese von allen Empfängern der entsprechenden Ausbreitungspfade empfangen werden können.

Die im Vorangegangenen beschriebenen Ausführungsformen der Erfindung weisen eine Reihe von Vorteilen auf. Insbesondere werden zur Lokalisation eines Objekts neuartige Ausbreitungspfade über RIS-Oberflächen berücksichtigt. Hierdurch wird es ermöglicht, die Ausbreitungspfade flexibel anzupassen, indem die Strahlungscharakteristik der entsprechenden Oberflächenelemente geeignet verändert wird. Beispielsweise können Ausbreitungspfade in bestimmten räumlichen Gebieten zugeschaltet werden, sofern dort eine hohe Genauigkeit der Lokalisation benötigt wird bzw. das zu lokalisierende Objekt dort vermutet wird.

Literaturverzeichnis:

[1] J. Wilson, N. Patwari, "Radio tomographic imaging with wireless networks", IEEE Transactions on Mobile Computing, Vol. 9, Nr. 5, Seiten 621-632, Mai 2010

[2] M. Schmidhammer, C. Gentner, S. Sand, U.-C. Fiebig, "Multipath-enhanced device-free localization in wideband wireless networks", IEEE Antennas and Wireless Propagation Letters, Vol. 20, Nr. 4, Seiten 453-457, 2021

[3] E. Bjoemson, H. Wymeersch, B. Matthiesen, P. Popovski, L. Sanguinetti, E. de Carvalho, "Reconfigurable intelligent surfaces: A signal processing perspective with wireless applications", IEEE Signal Processing Magazine, Vol. 39, Nr. 2, Seiten 135-158, 2022

[4] B. H. Fleury, M. Tschudin, R. Heddergott, D. Dahlhaus, K. I. Pedersen, "Channel Parameter Estimation in Mobile Radio Environments using SAGE algorithm", IEEE J. Sel. Areas Commun., Vol. 17, Nr. 3, Seiten 434-450, März 1999

**Patentansprüche**

1. Verfahren zur rechnergestützten Lokalisation eines Objekts (O) mittels eines Funknetzes, wobei sich die Funkwellen des Funknetzes in einem Raumbereich entlang einer Anzahl von Ausbreitungspfaden (PA1, PA2, PA3, PA4, PA1', ..., PAN') zwischen einer Anzahl von Sendern (TR, TR') und einer Anzahl von Empfängern (RE, RE1', ..., REN') ausbreiten, wobei ein jeweiliger Ausbreitungspfad (PA1, PA2, PA3, PA4, PA1', ..., PAN') einen vorbekannten Übertragungsweg der Funkwellen des Funknetzes zwischen einem Sender (TR, TR') und einem Empfänger (RE, RE1', ..., REN') repräsentiert, die dem jeweiligen Ausbreitungspfad (PA1, PA2, PA3, PA4, PA1', ..., PAN') zugeordnet sind, wobei

   a) zu einem jeweiligen Messzeitpunkt aus einer Anzahl von Messzeitpunkten Signalwerte ($\hat{\alpha}_i(t_k)$) des Funknetzes für die Anzahl von Ausbreitungspfaden (PA1, PA2, PA3, PA4, PA1', ..., PAN') gewonnen werden, wobei der Signalwert für einen jeweiligen Ausbreitungspfad (PA1, PA2, PA3, PA4, PA1', ..., PAN') ein Signalstärkemaß der Funkwellen ist, welche auf dem jeweiligen Ausbreitungspfad (PA1, PA2, PA3, PA4, PA1', ..., PAN') von dem Empfänger (RE, RE1', ..., REN') des jeweiligen Ausbreitungspfads (PA1, PA2, PA3, PA4, PA1', ..., PAN') empfangen werden, und
   b) aus den zum jeweiligen Messzeitpunkt gewonnenen Signalwerten ($\hat{\alpha}_i(t_k)$) die Position des Objekts (O) innerhalb des Raumbereichs zu dem jeweiligen Messzeitpunkt geschätzt wird,

   **dadurch gekennzeichnet, dass**
   die Anzahl von Ausbreitungspfaden (PA1, PA2, PA3, PA4, PA1', ..., PAN') einen oder mehrere vorgegebene Ausbreitungspfade (PA1', ..., PAN') umfasst, wobei ein jeweiliger vorgegebener Ausbreitungspfad (PA1', ..., PAN') ein oder mehrere Oberflächenelemente (4) enthält, die an vorbekannten Positionen im Raumbereich angeordnet sind und jeweils als eine rekonfigurierbare intelligente Oberfläche ausgestaltet sind, für welche die Abstrahlcharakteristik von Funkwellen konfigurierbar ist, welche von der rekonfigurierbaren intelligenten Oberfläche in Antwort auf einfallende Funkwellen abgestrahlt werden, wobei auf ein jeweiliges Oberflächenelement (4) entlang des jeweiligen vorgegebenen Ausbreitungspfads (PA1', ..., PAN') Funkwellen fallen, welche aus Funkwellen des Senders (TR') des jeweiligen vorgegebenen Ausbreitungspfads (PA1', ..., PAN') hervorgehen, und das jeweilige Oberflächenelement (4) die darauf fallenden Funkwellen in Funkwellen wandelt, welche mit einer vorbekannten konfigurierten Abstrahlcharakteristik von dem jeweiligen Oberflächenelement (4) ausgesendet werden, wobei zumindest ein Teil der ausgesendeten Funkwellen entlang des jeweiligen vorgegebenen Ausbreitungspfads (PA1', ..., PAN') zu dem Empfänger (RE1', ..., REN') des jeweiligen vorgegebenen Ausbreitungspfads (PA1', ..., PAN') gelangt.

2. Verfahren nach Anspruch 1, **dadurch gekennzeichnet, dass** zumindest einer der vorgegebenen Ausbreitungspfade (PA1', ..., PAN') ein spezifischer Ausbreitungspfad ist, der ein einzelnes Oberflächenelement (4) enthält, auf welches Funkwellen entlang des spezifischen Ausbreitungspfads in Sichtlinie zu dem Sender (TR') des spezifischen Ausbreitungspfads (PA1', ..., PAN') fallen, wobei zumindest ein Teil der durch das einzelne Oberflächenelement (4) gewandelten Funkwellen entlang des spezifischen Ausbreitungspfads am Empfänger (RE1', ..., REN') des spezi-schen Ausbreitungspfads in Sichtlinie zu dem einzelnen Oberflächenelement (4) empfangen wird.

3. Verfahren nach Anspruch 2, **dadurch gekennzeichnet, dass** der Sender (TR') des spezifischen Ausbreitungspfads (PA1', ..., PAN') die Funkwellen als Strahlungskeule (SK) auf das einzelne Oberflächenelement (4) richtet.

4. Verfahren nach einem der vorhergehenden Ansprüche, **dadurch gekennzeichnet, dass** zumindest ein vorgegebener Ausbreitungspfad (PA1', ..., PAN') mehrere Oberflächenelemente (4) enthält.

**5.** Verfahren nach einem der vorhergehenden Ansprüche, **dadurch gekennzeichnet, dass** zumindest ein vorgegebener Ausbreitungspfad (PA1', ..., PAN') neben dem oder den Oberflächenelementen (4) ein oder mehrere Streuobjekte (3) enthält, an denen Funkwellen entlang des vorgegebenen Ausbreitungspfads (PA1', ..., PAN') gestreut werden, und/oder ein oder mehrere Reflexionsobjekte (1, 2) enthält, an denen Funkwellen entlang des vorgegebenen Ausbreitungspfads (PA1', ..., PAN') reflektiert werden.

**6.** Verfahren einem der vorhergehenden Ansprüche, **dadurch gekennzeichnet, dass** die Anzahl von vorgegebenen Ausbreitungspfaden (PA1', ..., PAN') eine Gruppe von vorgegebenen Ausbreitungspfaden (PA1', ..., PAN') enthält, wobei den vorgegebenen Ausbreitungspfaden (PA1', ..., PAN') der Gruppe der gleiche Sender (TR'), jedoch unterschiedliche Empfänger (RE1', ..., REN') zugeordnet sind und wobei die vorgegebenen Ausbreitungspfade (PA1', ..., PAN') der Gruppe das oder die gleichen Oberflächenelemente (4) enthalten.

**7.** Verfahren nach Anspruch 6 in Kombination mit Anspruch 2 oder 3, **dadurch gekennzeichnet, dass** die vorgegebenen Ausbreitungspfade (PA1', ..., PAN') der Gruppe spezifische Ausbreitungspfade sind.

**8.** Verfahren nach einem der vorhergehenden Ansprüche, **dadurch gekennzeichnet, dass** zumindest ein Oberflächenelement (4), das zumindest ein vorgegebener Ausbreitungspfad (PA1', ..., PAN') enthält, homogen Funkwellen in einen vorgegebenen Raumwinkel abstrahlt.

**9.** Verfahren nach einem der vorhergehenden Ansprüche, **dadurch gekennzeichnet, dass** zumindest ein Oberflächenelement (4), das zumindest ein vorgegebener Ausbreitungspfad (PA1', ..., PAN') enthält, die Funkwellen als eine oder mehrere Strahlungskeulen aussendet, wobei eine jeweilige Strahlungskeule (SK1, ..., SKN) in Richtung eines vorgegebenen Ausbreitungspfads (PA1', ..., PAN') verläuft.

**10.** Verfahren nach einem der vorhergehenden Ansprüche, **dadurch gekennzeichnet, dass** das Funknetz ein WLAN-Netz oder ein UWB-Netz oder ein Mobilfunknetz ist.

**11.** Vorrichtung zur rechnergestützten Lokalisation eines Objekts (O) mittels eines Funknetzes, wobei sich die Funkwellen des Funknetzes in einem Raumbereich entlang einer Anzahl von Ausbreitungspfaden (PA1, PA2, PA3, PA4, PA1', ..., PAN') zwischen einer Anzahl von Sendern (TR, TR') und einer Anzahl von Empfängern (RE, RE1', ..., REN') ausbreiten, wobei ein jeweiliger Ausbreitungspfad (PA1, PA2, PA3, PA4, PA1', ..., PAN') einen vorbekannten Übertragungsweg der Funkwellen des Funknetzes zwischen einem Sender (TR, TR') und einem Empfänger (RE, RE1', ..., REN') repräsentiert, die dem jeweiligen Ausbreitungspfad (PA1, PA2, PA3, PA4, PA1', ..., PAN') zugeordnet sind, wobei die Vorrichtung zur Durchführung eines Verfahrens eingerichtet ist, bei dem:

a) zu einem jeweiligen Messzeitpunkt aus einer Anzahl von Messzeitpunkten Signalwerte ($\hat{\alpha}_i(t_k)$) des Funknetzes für die Anzahl von Ausbreitungspfaden (PA1, PA2, PA3, PA4, PA1', ..., PAN') gewonnen werden, wobei der Signalwert für einen jeweiligen Ausbreitungspfad (PA1, PA2, PA3, PA4, PA1', ..., PAN') ein Signalstärkemaß der Funkwellen ist, welche auf dem jeweiligen Ausbreitungspfad (PA1, PA2, PA3, PA4, PA1', ..., PAN') von dem Empfänger (RE, RE1', ..., REN') des jeweiligen Ausbreitungspfads (PA1, PA2, PA3, PA4, PA1', ..., PAN') empfangen werden, und

b) aus den zum jeweiligen Messzeitpunkt gewonnenen Signalwerten ($\hat{\alpha}_i(t_k)$) die Position des Objekts (O) innerhalb des Raumbereichs zu dem jeweiligen Messzeitpunkt geschätzt wird,

**dadurch gekennzeichnet, dass**
die Anzahl von Ausbreitungspfaden (PA1, PA2, PA3, PA4, PA1', ..., PAN') einen oder mehrere vorgegebene Ausbreitungspfade (PA1', ..., PAN') umfasst, wobei ein jeweiliger vorgegebener Ausbreitungspfad (PA1', ..., PAN') ein oder mehrere Oberflächenelemente (4) enthält, die an vorbekannten Positionen im Raumbereich angeordnet sind und jeweils als eine rekonfigurierbare intelligente Oberfläche ausgestaltet sind, für welche die Abstrahlcharakteristik von Funkwellen konfigurierbar ist, welche von der rekonfigurierbaren intelligenten Oberfläche in Antwort auf einfallende Funkwellen abgestrahlt werden, wobei auf ein jeweiliges Oberflächenelement (4) entlang des jeweiligen vorgegebenen Ausbreitungspfads (PA1', ..., PAN') Funkwellen fallen, welche aus Funkwellen des Senders (TR') des jeweiligen vorgegebenen Ausbreitungspfads (PA1', ..., PAN') hervorgehen, und das jeweilige Oberflächenelement (4) die darauf fallenden Funkwellen in Funkwellen wandelt, welche mit einer vorbekannten konfigurierten Abstrahlcharakteristik von dem jeweiligen Oberflächenelement (4) ausgesendet werden, wobei zumindest ein Teil der ausgesendeten Funkwellen entlang des jeweiligen vorgegebenen Ausbreitungspfads (PA1', ..., PAN') zu dem Empfänger (RE1', ..., REN') des jeweiligen vorgegebenen Ausbreitungspfads (PA1', ..., PAN') gelangt.

12. Vorrichtung nach Anspruch 11, **dadurch gekennzeichnet, dass** die Vorrichtung zur Durchführung eines Verfahrens nach einem der Ansprüche 2 bis 10 eingerichtet ist.

Fig. 1

EP 4 575 547 A1

Fig. 2

Fig. 3

Fig. 4

Europäisches Patentamt
European Patent Office
Office européen des brevets

# EUROPÄISCHER RECHERCHENBERICHT

**Nummer der Anmeldung**

EP 24 21 9750

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 10 2018 206677 A1 (DEUTSCH ZENTR LUFT & RAUMFAHRT [DE]) 31. Oktober 2019 (2019-10-31) * Zusammenfassung * * Absätze [0007], [0023] - [0032]; Abbildungen 1-5 * | 1-12 | INV. G01S5/02 G01S5/14 G01S13/87 H01Q15/14 |
| Y | ZHANG JINGWEN ET AL: "Positioning with Dual Reconfigurable Intelligent Surfaces in Millimeter-Wave MIMO Systems", 2020 IEEE/CIC INTERNATIONAL CONFERENCE ON COMMUNICATIONS IN CHINA (ICCC), IEEE, 9. August 2020 (2020-08-09), Seiten 800-805, XP033853278, DOI: 10.1109/ICCC49849.2020.9238887 [gefunden am 2020-10-23] * Zusammenfassung * * Absätze [000I], [00II]; Abbildungen 1,2 * | 1-12 | |
| Y,D | SCHMIDHAMMER MARTIN ET AL: "Multipath-Enhanced Device-Free Localization in Wideband Wireless Networks", IEEE ANTENNAS AND WIRELESS PROPAGATION LETTERS, IEEE, PISCATAWAY, NJ, US, Bd. 20, Nr. 4, 18. Januar 2021 (2021-01-18), Seiten 453-457, XP011848597, ISSN: 1536-1225, DOI: 10.1109/LAWP.2021.3052438 [gefunden am 2021-04-06] * Zusammenfassung * * Seiten 135,136; Abbildungen 1,5,7 * | 1-12 | **RECHERCHIERTE SACHGEBIETE (IPC)** G01S H01Q |

-/--

Der vorliegende Recherchenbericht wurde für alle Patentansprüche erstellt

| Recherchenort | Abschlußdatum der Recherche | Prüfer |
|---|---|---|
| München | 13. Mai 2025 | van Norel, Jan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches
Patentamt

European
Patent Office

Office européen
des brevets

# EUROPÄISCHER RECHERCHENBERICHT

**Nummer der Anmeldung**

EP 24 21 9750

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y,D | BJORNSON EMIL ET AL: "Reconfigurable Intelligent Surfaces: A signal processing perspective with wireless applications", IEEE SIGNAL PROCESSING MAGAZINE, Bd. 39, Nr. 2, 1. März 2022 (2022-03-01), Seiten 135-158, XP055958636, USA ISSN: 1053-5888, DOI: 10.1109/MSP.2021.3130549 * Zusammenfassung * * Absätze [000I], [00II]; Abbildung 1 * | 1-12 | |

-----

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 13. Mai 2025 | van Norel, Jan |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 21 9750

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-05-2025

| Im Recherchenbericht angeführtes Patentdokument | Datum der Veröffentlichung | Mitglied(er) der Patentfamilie | Datum der Veröffentlichung |
|---|---|---|---|
| DE 102018206677 A1 | 31-10-2019 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **J. WILSON** ; **N. PATWARI**. Radio tomographic imaging with wireless networks. *IEEE Transactions on Mobile Computing*, May 2010, vol. 9 (5), 621-632
- **M. SCHMIDHAMMER** ; **C. GENTNER** ; **S. SAND** ; **U.-C. FIEBIG**. Multipath-enhanced device-free localization in wideband wireless networks. *IEEE Antennas and Wireless Propagation Letters*, 2021, vol. 20 (4), 453-457

- **E. BJOEMSON** ; **H. WYMEERSCH** ; **B. MATTHIE-SEN** ; **P. POPOVSKI** ; **L. SANGUINETTI** ; **E. DE CARVALHO**. Reconfigurable intelligent surfaces: A signal processing perspective with wireless applications. *IEEE Signal Processing Magazine*, 2022, vol. 39 (2), 135-158
- **B. H. FLEURY** ; **M. TSCHUDIN** ; **R. HEDDERGOTT** ; **D. DAHLHAUS** ; **K. I. PEDERSEN**. Channel Parameter Estimation in Mobile Radio Environments using SAGE algorithm. *IEEE J. Sel. Areas Commun.*, March 1999, vol. 17 (3), 434-450